(19)

**Europäisches Patentamt**
**European Patent Office**
**Office européen des brevets**

(11) **EP 4 238 844 A1**

(12) **EUROPEAN PATENT APPLICATION**
published in accordance with Art. 153(4) EPC

(43) Date of publication:
**06.09.2023 Bulletin 2023/36**

(21) Application number: **22800995.7**

(22) Date of filing: **09.11.2022**

(51) International Patent Classification (IPC):
**B60W 60/00** (2020.01)    **B60W 30/08** (2012.01)
**B60W 30/18** (2012.01)    **B60W 50/00** (2006.01)

(86) International application number:
**PCT/KR2022/017580**

(87) International publication number:
**WO 2023/140476 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022 KR 20220009475**

(71) Applicant: **Morai Inc.**
**Seoul 06168 (KR)**

(72) Inventor: **JUNG, Jiwon**
**Seoul 06168 (KR)**

(74) Representative: **Studio Torta S.p.A.**
**Via Viotti, 9**
**10121 Torino (IT)**

(54) **METHOD AND SYSTEM FOR EVALUATING PERFORMANCE OF AUTONOMOUS DRIVING ALGORITHM**

(57)    Provided is a method for evaluating a performance of an autonomous driving algorithm performed by one or more processors, including determining a first parameter set and a second parameter set which are associated with a driving of an ego vehicle in which the autonomous driving algorithm is applied and a driving of a surrounding vehicle, based on a collision scenario between the ego vehicle and the surrounding vehicle, generating a plurality of cases associated with the collision scenario based on the first parameter set and the second parameter set, and performing a simulation for each of the plurality of cases using the autonomous driving algorithm, in which each parameter of the first parameter set has a fixed value, and each parameter of the second parameter set has a predetermined sweeping range.

FIG. 1

**Description**

**TECHNICAL FIELD**

The present disclosure relates to a method and a system for evaluating a performance of an autonomous driving algorithm, and specifically, to a method and a system for evaluating the performance of an autonomous driving algorithm by performing a simulation through a plurality of cases associated with a collision scenario.

**BACKGROUND**

Autonomous driving technology refers to a technology of recognizing a surrounding environment using radar, light detection and ranging (LIDAR), GPS, a camera, and the like, to enable autonomous driving of a vehicle or the like that requires minimal or no human intervention. In the actual driving environment, there are various factors that influence autonomous driving, such as other vehicles or traffic structures in the road area, buildings in the area outside the road and the like, and therefore, in order to enable autonomous driving function that does not require human intervention, a vast amount of testing is necessary.

Meanwhile, while driving, autonomous vehicles should be able to respond to various situations, such as another vehicle that suddenly cuts in, or another vehicle that rushes forward, ignoring signals at an intersection. It is difficult to accurately evaluate whether a specific autonomous driving algorithm can respond to such a situation with only a predetermined representative scenario. In addition, it is also difficult to evaluate the autonomous driving algorithm by determining only one scenario, because even in the same scenario, the behavior of the vehicle can change in response to even a small difference in the speed or location of the test vehicle (or ego vehicle) or the surrounding vehicle and dangerous situations can occur.

In order to solve this problem, tools that provide a scenario similar to general driving have recently appeared, and methods for evaluating an autonomous driving algorithm by comparing a plurality of algorithms in the same given environment are developed. However, these are only the qualitative evaluation methods, and it is difficult to know scenarios where the autonomous driving algorithm is vulnerable with quantitative evaluation. In addition, the data-based artificial intelligence algorithms are increasing recently, but there is a problem in that even minute changes in the scenario can cause unpredictable and large changes in the behavior of the vehicle in which the autonomous driving algorithm is applied. Therefore, there is a need for a method that can analyze the performance of the algorithm covering all cases in the scenario and quantitatively evaluate the vulnerability.

**SUMMARY**

In order to solve one or more problems (e.g., the problems described above and/or other problems not explicitly described herein), the present disclosure provides a method for, a non-transitory computer-readable recording medium storing instructions for, and a system (apparatus) for evaluating the performance of an autonomous driving algorithm.

The present disclosure may be implemented in a variety of ways, including a method, a system (apparatus), or a non-transitory computer-readable recording medium storing instructions.

A method for evaluating a performance of an autonomous driving algorithm is provided, in which the method may be performed by one or more processors. The method for evaluating the performance of the autonomous driving algorithm may include determining a first parameter set and a second parameter set which are associated with a driving of an ego vehicle in which the autonomous driving algorithm is applied and a driving of a surrounding vehicle, based on a collision scenario between the ego vehicle and the surrounding vehicle, generating a plurality of cases associated with the collision scenario based on the first parameter set and the second parameter set, and performing a simulation for each of the plurality of cases using the autonomous driving algorithm, in which each parameter of the first parameter set may have a fixed value, and each parameter of the second parameter set may have a predetermined sweeping range.

According to the method for evaluating the performance of the autonomous driving algorithm, the first parameter set may include at least one parameter associated with a driving of the ego vehicle, and the second parameter set may include at least one parameter associated with a driving of the surrounding vehicle.

The generating the plurality of cases may include generating the plurality of cases by changing, within the sweeping range, each parameter value in the second parameter set.

The generating the plurality of cases may further include determining, for each of the plurality of cases, a third parameter set based on the first parameter set and the second parameter set such that the ego vehicle and the surrounding vehicle collide with each other.

The first parameter set may include a speed value of the ego vehicle, and the third parameter set may include a start point value of the surrounding vehicle.

The collision scenario may be a collision scenario associated with a lane change, and the first parameter set, the second parameter set and the third parameter set may be obtained by parameterizing the collision scenario associated with the lane change.

The collision scenario may be a collision scenario associated with an intersection, and the first parameter set, the second parameter set and the third parameter set are obtained by parameterizing the collision scenario associated with the intersection.

The performing the simulation may include evaluating a collision risk level for each of the plurality of cases.

The method for evaluating the performance of the autonomous driving algorithm may further include updating the autonomous driving algorithm based on at least one of the plurality of cases that has a collision risk level equal to or greater than a predetermined threshold.

At least one parameter of the first parameter set may be determined by data received from a moving object that is actually moving while the autonomous driving algorithm is in operation, and a simulation result of a case having a highest collision risk level among the plurality of cases is displayed on a display installed inside the moving object that is actually moving.

The collision scenario may be a collision scenario associated with a lane change, and the first parameter set may include a collision point, a scenario activation time, and a speed of the ego vehicle, and the second parameter set may include a speed of the surrounding vehicle and an acceleration of the surrounding vehicle.

The collision scenario may be a collision scenario associated with an intersection, and the first parameter set may include a collision point, a scenario activation time, and a speed of the ego vehicle, and the second parameter set may include a speed of the surrounding vehicle and a collision point shift value.

There is provided a non-transitory computer-readable recording medium storing instructions that cause performance of the method for evaluating the performance of an autonomous driving algorithm on a computer according to an example of the present disclosure.

A system for evaluating a performance of an autonomous driving algorithm is provided, which may include a memory, and one or more processors connected to the memory and configured to execute one or more computer-readable programs included in the memory, in which the one or more programs may include instructions for receiving a first parameter set and a second parameter set which are associated with a collision scenario between an ego vehicle in which the autonomous driving algorithm is applied and a surrounding vehicle, generating a plurality of cases associated with the collision scenario based on the first parameter set and the second parameter set, and performing a simulation for each of the plurality of cases using the autonomous driving algorithm, in which each parameter of the first parameter set may have a fixed value, and each parameter of the second parameter set may have a predetermined sweeping range.

According to some examples of the present disclosure, by automatically generating various cases by changing the position, speed, acceleration, and the like of the collision vehicle in a single collision scenario in order to evaluate the autonomous driving algorithm, it is possible to quantitatively evaluate the autonomous driving algorithm and verify its performance.

According to some examples of the present disclosure, by evaluating the collision risk level of the autonomous driving algorithm for various cases of collision scenarios, it is possible to detect a situation in which the autonomous driving algorithm is vulnerable and efficiently improve the autonomous driving algorithm.

According to some examples of the present disclosure, since the vehicle in which the autonomous driving algorithm is applied can simulate the behavior of the vehicle for various cases of the collision scenario while driving on the actual road, and the simulation result can be checked inside the vehicle, it is possible to safely and effectively evaluate the driving performance of the autonomous driving algorithm.

The effects of the present disclosure are not limited to the effects described above, and other effects not described herein can be clearly understood by those of ordinary skill in the art (hereinafter referred to as "ordinary technician") from the description of the claims.

## BRIEF DESCRIPTION OF THE DRAWINGS

The above and other objects, features and advantages of the present disclosure will be described with reference to the accompanying drawings described below, where similar reference numerals indicate similar elements, but not limited thereto, in which:

FIG. 1 is a diagram illustrating examples of collision scenarios for performance evaluation of an autonomous driving algorithm;

FIG. 2 is a block diagram illustrating an internal configuration of a user terminal and an information processing system;

FIG. 3 is a diagram illustrating an internal configuration of a processor of the user terminal or information processing system;

FIG. 4 is a diagram illustrating an example of parameters associated with a lane change collision scenario;

FIG. 5 is a diagram illustrating an example of a graph of collision risk levels for a plurality of cases of the lane change collision scenario;

FIG. 6 is a diagram illustrating an example of parameters associated with an intersection collision scenario;

FIG. 7 is a diagram illustrating an example of a graph of collision risk levels for a plurality of cases of the intersection collision scenario;

FIG. 8 is a diagram illustrating an example of collision types of a collision point shift parameter in an intersection collision scenario;

FIG. 9 is a diagram illustrating an example of avoidance trajectory candidates generated by a collision avoidance algorithm and a risk level of each trajectory;

FIG. 10 is a diagram illustrating an example in which a simulation result is displayed through a display installed inside a vehicle driving on an actual road; and

FIG. 11 is a flowchart illustrating a method for performance evaluation of an autonomous driving algorithm.

## DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, if a portion is stated as "comprising (including)" a component, it intends to mean that the portion may additionally comprise (or include or have) another component, rather than excluding the same, unless specified to the contrary.

Further, the term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to play one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "units" may be combined into a smaller number of components and "modules" or "units", or further divided into additional components and "modules" or "units."

The "module" or "unit" may be implemented as a processor and a memory. The "processor" should be interpreted broadly to encompass a general-purpose processor, a central processing unit (CPU), a microprocessor, a digital signal processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and so on. The memory is said to be in electronic communication with a processor if the processor can read information from and/or write information to the memory. The memory integrated with the processor is in electronic communication with the processor.

In the present disclosure, a "system" may refer to at least one of a server device and a cloud device, but not limited thereto. For example, the system may include one or more server devices. In another example, the system may include one or more cloud devices. In still another example, the system may include both the server device and the cloud device operated in conjunction with each other.

In the present disclosure, a "moving object" may refer to an object in which an autonomous driving algorithm is applied for autonomous driving and/or flying. For example, examples may include an autonomous vehicle, a drone, and a robot, but is not limited thereto. In addition, in the present disclosure, the "ego vehicle" may be a moving object in which an autonomous driving algorithm is applied, and the "surrounding vehicle" may refer to a virtual moving object in a simulation, which is used for evaluating the ego vehicle in which the autonomous driving algorithm is applied.

In the present disclosure, a "parameter set" may refer to a set of one or a plurality of parameters.

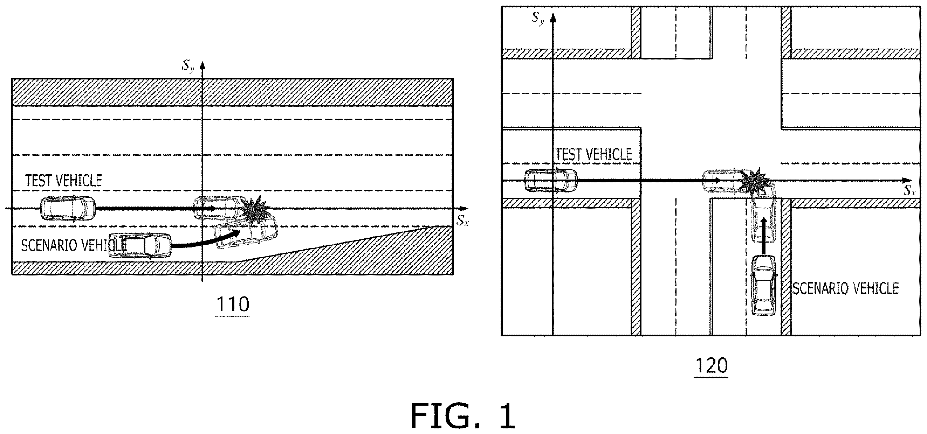

FIG. 1 is a diagram illustrating examples of collision scenarios 110 and 120 for performance evaluation of the autonomous driving algorithm. For the commercialization of a vehicle (or a moving object) in which the autonomous driving algorithm is applied, safety must be ensured first. Evaluating the performance of the autonomous driving algorithm through simulation is necessary, because it is dangerous to the other driving vehicles or pedestrians to test the vehicle in which the autonomous driving algorithm is applied with unverified safety on the actual road. In order to evaluate the performance of the autonomous driving algorithm through simulation, it is necessary to evaluate the behavior of the autonomous vehicle in various scenarios and also repeatedly evaluate them even in the same scenario by generating various cases according to changes in the position, speed, or acceleration of the surrounding vehicles.

A system for evaluating the performance of the autonomous driving algorithm may perform performance evaluation of the autonomous driving algorithm for various collision scenarios. Specifically, the system for evaluating the performance of the autonomous driving algorithm may receive parameters associated with a collision scenario between an ego vehicle in which the autonomous driving algorithm is applied and a surrounding vehicle, and generate a plurality of cases based on the received parameters. For example, the system for evaluating the performance of the autonomous driving algorithm may automatically determine parameters associated with driving of the ego vehicle in which the autonomous driving algorithm is applied and the surrounding vehicle based on a collision scenario between the ego vehicle and the surrounding vehicle. The system for evaluating the performance of the autonomous driving algorithm may perform simulations for each of a plurality of cases using the autonomous driving algorithm. Additionally, the system for evaluating the performance of the autonomous driving algorithm may evaluate the collision risk level for each of a plurality of cases. In addition, the system for evaluating the performance of the autonomous driving algorithm may update the autonomous driving algorithm based on a case having a collision risk level equal to or greater than a threshold. That is, the user may repeatedly perform simulations for various cases of each scenario using the system for evaluating the performance of the autonomous driving algorithm, and evaluate the behavior of the vehicle desired to be evaluated in each scenario. In addition, by evaluating the collision risk level between the ego vehicle and the surrounding vehicle, it is possible to derive a case in which the most dangerous situation occurs or cases having the collision risk levels equal to or greater than the threshold, and improve the autonomous driving algorithm based on the corresponding case.

The system for evaluating the performance of the autonomous driving algorithm may perform performance evaluation of the autonomous driving algorithm with respect to a collision scenario 110 associated with a lane change. In this case, the collision scenario 110 associated with the lane change is a collision scenario that frequently occurs in highway driving, and may be set as a scenario in which a collision is caused by a surrounding vehicle changing a lane while the ego vehicle is driving. The collision scenario 110 associated with the lane change is one of important scenarios because the response of the ego vehicle may vary according to various conditions such as the speed, distance, acceleration, and the like of the surrounding vehicle intervening.

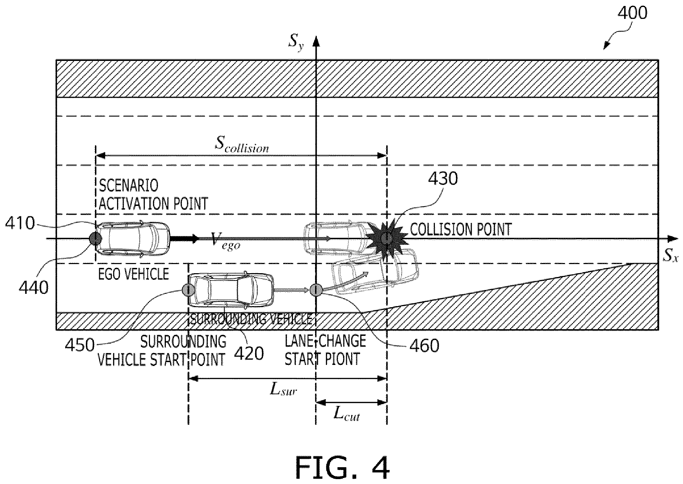

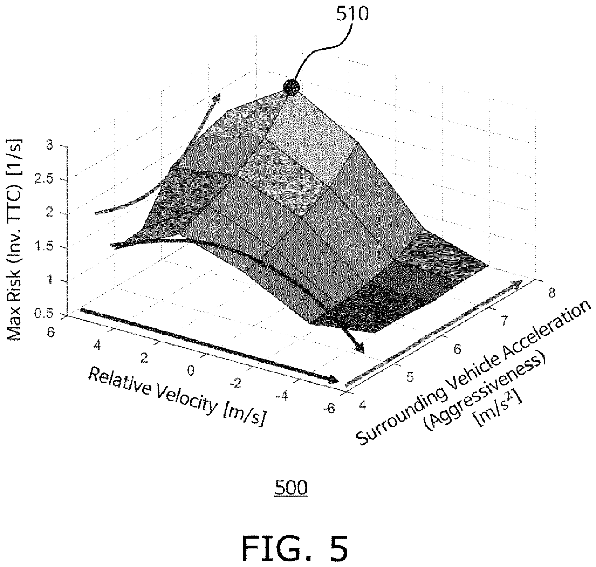

The system for evaluating the performance of the autonomous driving algorithm may receive parameters associated with the collision scenario 110 associated with the lane change between the ego vehicle in which the autonomous driving algorithm is applied and the surrounding vehicle, and generate a plurality of cases associated with the collision scenario 110 associated with the lane change based on the received parameters. A method of receiving or determining parameters associated with the lane change and generating a plurality of cases based the received parameters to evaluate the collision risk level will be described in detail below with reference to FIGS. 4 and 5.

The system for evaluating the performance of the autonomous driving algorithm may perform performance evaluation of the autonomous driving algorithm with respect to the collision scenario 120 associated with an intersection. In this case, the collision scenario 120 associated with the intersection is a collision scenario that occurs frequently in city driving, and may be typically set as a vertical collision scenario between the ego vehicle and the surrounding vehicle. Due to the characteristics of the vertical collision, a plurality of collision scenarios may be generated as a collision point moves, such as a scenario in which the surrounding vehicle intervenes in front of the ego vehicle and collides, or a scenario in which the surrounding vehicle collides with the side of the ego vehicle, and the like.

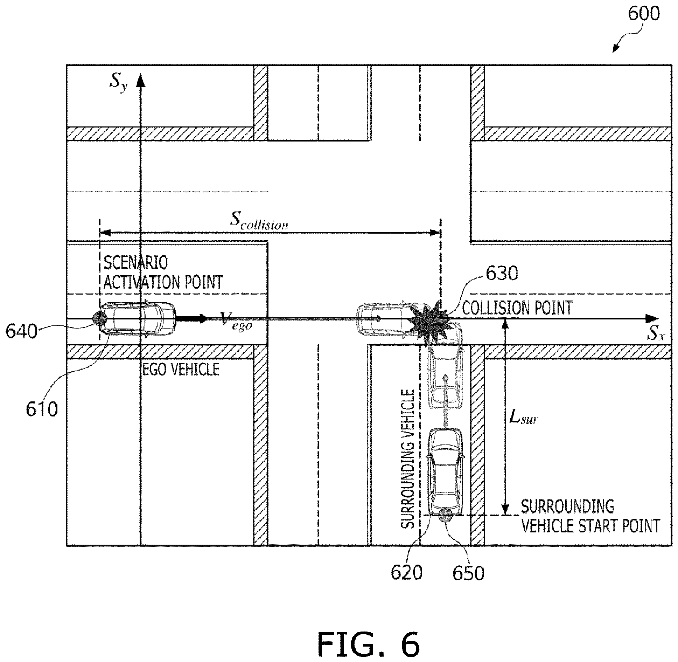

The system for evaluating the performance of the autonomous driving algorithm may receive parameters associated with the collision scenario 120 associated with the intersection between the ego vehicle in which the autonomous driving algorithm is applied and the surrounding vehicle, and generate a plurality of cases associated with the collision scenario 120 associated with the intersection based on the received parameters. A method of receiving or determining parameters associated with the intersection and generating a plurality of cases based the received parameters to evaluate the collision risk level will be described in detail below with reference to FIGS. 6 to 8.

Hereinafter, for convenience of explanation, the method for performance evaluation of the autonomous driving algorithm will be described with reference to examples of certain representative collision scenarios which are the collision scenario 110 associated with the lane change and the collision scenario 120 associated with the intersection, but aspects are not limited thereto, and it is of course possible that other collision scenarios may be applied to evaluate the performance of the autonomous driving algorithm.

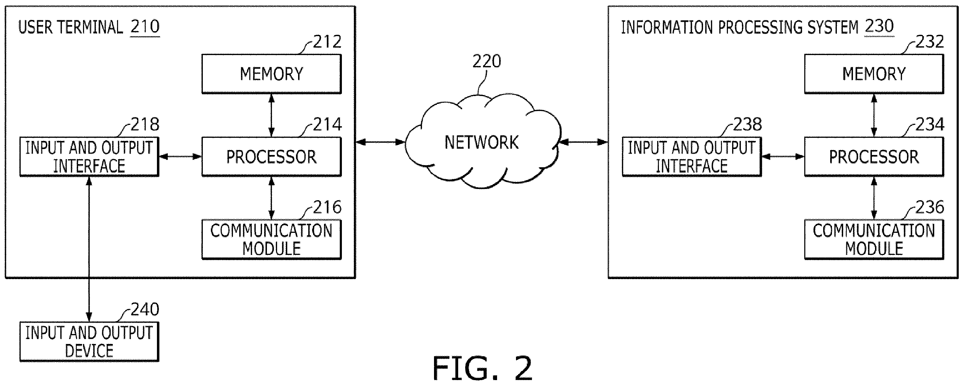

FIG. 2 is a block diagram illustrating an internal configuration of a user terminal 210 and an information processing system 230. The user terminal 210 may refer to any computing device that is capable of executing an autonomous driving algorithm performance evaluation application and capable of wired/wireless communication, and may include a PC terminal, a mobile phone terminal, a tablet terminal, and the like, for example. As illustrated, the user terminal 210 may include a memory 212, a processor 214, a communication module 216, and an input and output interface 218. Likewise, the information processing system 230 may include a memory 232, a processor 234, a communication module 236, and an input and output interface 238. As illustrated in FIG. 2, the user terminal 210 and the information processing system 230 may be configured to communicate information and/or data through a network 220 using the respective communication modules 216 and 236. In addition, an input and output device 240 may be configured to input information and/or data to the user terminal 210 or output information and/or data generated from the user terminal 210 through the input and output interface 218.

The memories 212 and 232 may include any non-transitory computer-readable recording medium. The memories 212 and 232 may include a permanent mass storage device such as random access memory (RAM), read only memory (ROM), disk drive, solid state drive (SSD), flash memory, and so on. As another example, a non-destructive mass storage device such as ROM, SSD, flash memory, disk drive, and so on may be included in the user terminal 210 or the information processing system 230 as a separate permanent storage device that is distinct from the memory. In addition, an operating system and at least one program code (e.g., a code for autonomous driving algorithm performance evaluation application, and the like installed and driven in the user terminal 210) may be stored in the memories 212 and 232.

These software components may be loaded from a computer-readable recording medium separate from the memories 212 and 232. Such a separate computer-readable recording medium may include a recording medium directly connectable to the user terminal 210 and the information processing system 230, and may include a computer-readable recording medium such as a floppy drive, a disk, a tape, a DVD/CD-ROM drive, a memory card, and so on, for example. As another example, the software components may be loaded into the memories 212 and 232 through the communication modules rather than the computer-readable recording medium. For example, at least one program may be loaded into the memories 212 and 232 based on a computer program (e.g., autonomous driving algorithm performance evaluation application) installed by files provided by the developers or a file distribution system for distributing an installation file of the application through the network 220.

The processors 214 and 234 may be configured to process the instructions of the computer program by performing basic arithmetic, logic, and input and output operations. The instructions may be provided to the processors 214 and 234 from the memories 212 and 232 or the communication modules 216 and 236. For example, the processors 214 and 234 may be configured to execute the received instructions according to a program code stored in a recording device such as the memories 212 and 232.

The communication modules 216 and 236 may provide a configuration or function for the user terminal 210 and the information processing system 230 to communicate with each other through the network 220, and may provide a configuration or function for the user terminal 210 and/or the information processing system 230 to communicate with another user terminal or another system (e.g., a separate cloud system or the like). For example, a request (for example, a request to perform simulation for collision scenario) generated by the processor 214 of the user terminal 210 according to the program code stored in the recording device such as the memory 212 and the like may be transmitted to the information processing system 230 through the network 220 under the control of the communication module 216. Conversely, a control signal or a command provided under the control of the processor 234 of the information processing system 230 may be received by the user terminal 210 through the communication module 216 of the user terminal 210 through the communication module 236 and the network 220. For example, the user terminal 210 may receive a result of performing the simulation for the collision scenario from the information processing system 230 through the communication module 216.

The input and output interface 218 may be a means for interfacing with the input and output device 240. As an example, the input device may include a device such as a camera including an image sensor, a keyboard, a microphone, a mouse, and so on, and the output device may include a device such as a display, a speaker, a haptic feedback device, and so on. As another example, the input and output interface 218 may be a means for interfacing with a device such as a touch screen or the like that integrates a configuration or function for performing inputting and outputting. For example, if the processor 214 of the user terminal 210 processes the instructions of the computer program loaded in the memory 212, a service screen, which is configured with the information and/or data provided by the information processing system 230 or other user terminals 210, may be displayed on the display through the input and output interface 218. While FIG. 2 illustrates that the input and output device 240 is not included in the user terminal 210, aspects are not limited thereto, and an input and output device may be configured as one device with the user terminal 210. In addition, the input and output interface 238 of the information processing system 230 may be a means for interfacing with a device (not illustrated) for inputting or outputting that may be connected to, or included in the information processing system 230. While FIG. 2 illustrates the input and output interfaces 218 and 238 as the components configured separately from the processors 214 and 234, aspects are not limited thereto, and the input and output interfaces 218 and 238 may be configured to be included in the processors 214 and 234.

The user terminal 210 and the information processing system 230 may include more than those components illustrated in FIG. 2. Meanwhile, most of the related components may not necessarily require exact illustration. The user terminal 210 may be implemented to include at least a part of the input and output device 240 described above. In addition, the user terminal 210 may further include other components such as a transceiver, a Global Positioning System (GPS) module, a camera, various sensors, a database, and the like. For example, when the user terminal 210 is a smartphone, it may include components generally included in the smartphone. For example, in an implementation, various components such as an acceleration sensor, a gyro sensor, a camera module, various physical buttons, buttons using a touch panel, input and output ports, a vibrator for vibration, and so on may be further included in the user terminal 210.

The processor 214 of the user terminal 210 may be configured to operate the autonomous driving algorithm performance evaluation application or a web browser application. A program code associated with the above application may be loaded into the memory 212 of the user terminal 210. While the application is running, the processor 214 of the user terminal 210 may receive information and/or data provided from the input and output device 240 through the input and output interface 218 or receive information and/or data from the information processing system 230 through the communication module 216, and process the received information and/or data and store it in the memory 212. In addition, such information and/or data may be provided to the information processing system 230 through the communication module 216.

While the autonomous driving algorithm performance evaluation application is running, the processor 214 may receive texts, images, and the like, which may be inputted or selected through the input device 240 such as a touch screen, a keyboard, and the like connected to the input and output interface 218, and store the received texts, and/or images in the memory 212 or provide them to the information processing system 230 through the communication module 216 and the network 220. For example, the processor 214 may receive information on parameters associated with a collision scenario and the like through an input device such as a touch screen, a keyboard, or the like. Accordingly, the received request and/or information may be provided to the information processing system 230 through the communication module 216 and the network 220.

The processor 214 of the user terminal 210 may be configured to manage, process, and/or store the information and/or data received from the input and output device 240, another user terminal, the information processing system 230 and/or a plurality of external systems. The information and/or data processed by the processor 214 may be provided to the information processing system 230 via the communication module 216 and the network 220. The processor 214 of the user terminal 210 may transmit the information and/or data to the input and output device 240 through the input and output interface 218 to output the same. For example, the processor 214 may display the received information and/or data on a screen of the user terminal.

The processor 234 of the information processing system 230 may be configured to manage, process, and/or store information and/or data received from the plurality of user terminals 210 and/or a plurality of external systems. The information and/or data processed by the processor 234 may be provided to the user terminals 210 via the communication module 236 and the network 220. While FIG. 2 illustrates the information processing system 230 as a single system, examples are not limited thereto, and it may include a plurality of systems and servers for providing various services associated with the autonomous driving algorithm performance evaluation. For example, the information processing system 230 may include a separate server including an autonomous driving algorithm performance evaluation simulation model, and the like.

While it is illustrated above that the user terminal 210 and the information processing system 230 communicate with each other to perform the autonomous driving algorithm performance evaluation, aspects are not limited thereto, and it is also possible for the user terminal 210 to perform autonomous driving algorithm performance evaluation by itself without the information processing system 230.

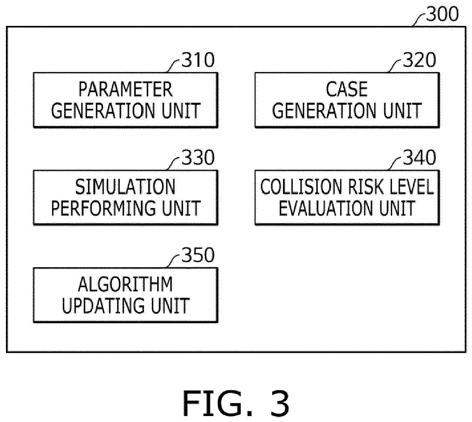

FIG. 3 is a diagram illustrating an internal configuration of a processor 300 of the user terminal or information processing system. As illustrated, a processor 314 of the information processing system (or user terminal) includes a parameter generation unit 310, a case generation unit 320, a simulation performing unit 330, a collision risk level evaluation unit 340, and an algorithm updating unit 350.

The parameter generation unit 310 may determine or receive a parameter set associated with the driving of the ego vehicle in which the autonomous driving algorithm is applied and the surrounding vehicle, based on a collision scenario between the ego vehicle and the surrounding vehicle. In this case, the parameter set associated with the collision scenario may include a parameter set (or a first parameter set) having fixed values and a parameter set (or a second parameter set) having predetermined sweeping ranges. For example, for the collision scenario associated with the lane change, the first parameter set may include a collision point, a scenario activation time, and an ego vehicle speed. In addition, the second parameter set may include a surrounding vehicle speed and a surrounding vehicle acceleration. In another example, for the collision scenario associated with the intersection, the first parameter set may include a collision point, a scenario activation time, and an ego vehicle speed. In addition, the second parameter set may include a surrounding vehicle speed and a collision point shift value.

The case generation unit 320 may generate a plurality of cases associated with the collision scenario based on the first parameter set and the second parameter set. For example, the case generation unit 320 may generate a plurality of cases by changing, within the sweeping range, each parameter value in the second parameter set. In addition, for each of the plurality of cases, the case generation unit 320 may determine a third parameter set based on the first parameter set and the second parameter set, according to which the ego vehicle and the surrounding vehicle collide with each other. In this example, the third parameter set includes a parameter defined to determine a correlation between the ego vehicle and the surrounding vehicle, and may be associated with the first parameter set and the second parameter set based on the vehicle dynamic characteristics. In this case, the case generation unit 320 may determine the surrounding vehicle start point value associated with the third parameter set based on an ego vehicle speed value associated with the first parameter set, thereby determining the activation timing of each of the plurality of cases of the collision scenario.

The simulation performing unit 330 may perform a simulation on each of a plurality of cases using an autonomous driving algorithm. The collision risk level evaluation unit 340 may evaluate a collision risk level based on results of the simulation performed on each of the plurality of cases. For example, the collision risk level evaluation unit 340 may evaluate the collision risk level using an inverse time-to-collision ($TTC^{-1}$) for each of the plurality of cases. In this case, the collision risk level evaluation unit 340 may determine an edge case having a collision risk level equal to or greater than a predetermined threshold (e.g., $TTC^{-1}$ value of 3 or greater). The edge case may indicate a vulnerable situation of the corresponding autonomous driving algorithm. In another example, the collision risk level evaluation unit 340 may calculate an average value of the inverse times-to-collision ($TTC^{-1}$) for a plurality of cases, and calculate the number of cases exceeding a predetermined threshold to quantitatively evaluate the performance of the autonomous driving algorithm.

The algorithm updating unit 350 may update the autonomous driving algorithm based on a case having the collision risk level equal to or greater than a predetermined threshold among a plurality of cases. For example, an inverse time-to-collision having a value equal to or greater than a predetermined threshold (e.g., a $TTC_{-1}$ value equal to or greater than 3) may be determined to be an edge case indicating a vulnerable situation of the corresponding autonomous driving algorithm, and the algorithm updating unit 350 may update the autonomous driving algorithm based on the edge case, thereby improving the algorithm.

The internal configuration of the processor 300 illustrated in FIG. 3 is only an example, and in some examples, configurations other than the illustrated internal configuration may be additionally included, or some configurations may be omitted, and some processes may be performed by other configurations or external systems. In addition, although the internal components of the processor 300 have been described separately for each function in FIG. 3, it does not necessarily mean that they are physically separated. Additionally, although one processor 300 is illustrated in FIG. 3, aspects are not limited thereto, and there may be a plurality of processors.

FIG. 4 is a diagram illustrating an example of a parameter associated with a lane change collision scenario 400. As illustrated, the lane change collision scenario 400 may be a scenario in which an ego vehicle 410 and a surrounding vehicle 420 collide with each other at a collision point 430. In this case, parameters associated with the lane change collision scenario 400 may include a speed ($V_{ego}$) of the ego vehicle 410, a scenario activation time ($TTC_{collision}$) to the collision point, a scenario activation distance ($S_{collision}$) of the ego vehicle 410, the collision point ($P_{colliusion}$) 430, a scenario activation point ($P_{activation}$) 440, a speed ($V_{sur}$) of the surrounding vehicle 420, a start point ($P_{start,sur}$) 450 of the surrounding vehicle 420, a lane change start point ($P_{lc,sur}$) 460, and an acceleration ($a_{sur}$) of the surrounding vehicle 420.

In order to generate a plurality of cases associated with a collision scenario for evaluating the autonomous driving algorithm, the processor of the information processing system (or user terminal) may reflect the driving (or flight) characteristics of the moving object with respect to the scenario to be evaluated to perform parameterization. In this case, a parameter value may be calculated in consideration of the interaction and collision between the ego vehicle 410 and the surrounding vehicle 420.

Table 1 below shows parameters forming the lane change collision scenario 400. In order to derive the parameters associated with the collision scenario, first, the collision point ($P_{collision}$) 430 between the ego vehicle 410 and the surrounding vehicle 420 may be determined, and based on this, the scenario activation point ($P_{activation}$) 440 and the surrounding vehicle start point ($P_{start,sur}$) 450 may be determined. Specifically, the surrounding vehicle start point ($P_{start,sur}$) 450 for generating the collision scenario may be determined based on the speed and position information of the surrounding vehicle 420 at the point in time when the ego vehicle passes through the scenario activation point 440.

In addition, the scenario 400 associated with the lane change may include a parameter for determining the lane change start point 460 of the surrounding vehicle 420. For example, a driver may change the lane abruptly within a short time or for a relatively long time depending on the driver's speed and driving characteristics, and accordingly, the lane change start point ($P_{lc,sur}$) 460 of the surrounding vehicle may be determined based on a range of the surrounding vehicle accelerations.

[Table 1]

| Classification | Parameter | |
|---|---|---|
| Preset Parameter | Collision Point | $P_{collision}$ (x) |
| | Scenario Activation Time | $TTC_{collision}$ (sec) |
| | Ego Vehicle Speed | $V_{ego}$ (m/s) |
| Calculated Parameter | Scenario Activation Distance | $S_{collision}$ (m) |
| | Scenario Activation Point | $P_{activation}$ (x) |
| | Surrounding Vehicle Start Point | $P_{start,sur}$ (x) |
| | Lane Change Start Point | $P_{lc,sur}$ (x) |
| Sweeping Parameter | Surrounding Vehicle Speed | $V_{sur}$ (m/s) |
| | Surrounding Vehicle Acceleration | $a_{sur}$ (m/s$^2$) |

The processor of the information processing system (or user terminal) may determine the parameters associated with the collision scenario using the vehicle dynamics characteristics. For example, the processor may determine a parameter associated with the land change using the vehicle dynamics characteristics so as to induce a collision at the collision point 430 of the ego vehicle 410 and the surrounding vehicle 420 in the scenario 400 associated with the lane change.

First, the time (that is, $TTC_{collision}$) taken for the ego vehicle 410 to reach the collision point 430 from the specific location may be associated with a point at which the collision scenario is activated (or the scenario activation point). That is, by setting the scenario activation time ($TTC_{collision}$) of the ego vehicle 410 to the collision point 430, it can be determined that the scenario is activated N seconds before the ego vehicle 410 reaches the collision point. In this case, while the scenario is in progress, the scenario activation distance ($S_{collison}$) of the ego vehicle 410 may be calculated according to Equation 1 below, and the scenario activation point ($P_{activation}$) may be calculated according to Equation 2 below.

<Equation 1>

$$S_{collision} = TTC_{collision} \times V_{ego}$$

<Equation 2>

$$P_{activation}(x) = P_{collision}(x) - S_{collision}(x)$$

where, $TTC$ may denote the scenario activation time of the ego vehicle 410 to the collision point 430, and $V_{ego}$ may indicate the speed of the ego vehicle 410. In addition, $P_{collision}$ may denote the collision point 430 between the ego vehicle 410 and the surrounding vehicle 420, and $S_{collision}$ may denote the scenario activation distance of the ego vehicle while the scenario is activated.

In order to generate an intentional collision scenario, it is necessary to determine a parameter associated with the driving characteristics of the surrounding vehicle 420. Specifically, the driving distance ($L_{sur}$) of the surrounding vehicle 420 may be calculated according to Equation 3. In addition, the starting position ($P_{start,sur}$) of the surrounding vehicle 420 may be calculated according to Equation 4.

<Equation 3>

$$L_{sur} = TTC_{collision} \times V_{sur} = \frac{S_{collision}}{V_{ego}} \times V_{sur}$$

<Equation 4>

$$P_{start,sur}(x) = P_{collision}(x) - L_{sur}(x)$$

where, $TTC_{collision}$ may denote the scenario activation time of the ego vehicle 410 to the collision point 430, $V_{sur}$ may denote the speed of the surrounding vehicle, $S_{collision}$ may denote the scenario activation distance of the ego vehicle 410 while the scenario is in progress, $V_{ego}$ may denote the speed of the ego vehicle 410, and $V_{sur}$ may denote the speed of the surrounding vehicle 420.

The lane change collision scenario 400 may be divided into a section in which the surrounding vehicle 420 travels straight ahead and a section in which the surrounding vehicle 420 changes a lane. The driving distance ($L_{cut}$) of the surrounding vehicle 420 in the section in which the surrounding vehicle 420 changes a lane may be calculated according to Equation 5. In addition, the lane change time ($t_y$) may be determined according to Equation 6.

<Equation 5>

$$L_{cut} = V_{sur} \times t_y$$

<Equation 6>

$$t_y = 2\sqrt{\frac{l_w}{a_{y,sur}}}$$

where, $V_{sur}$ may denote the speed of the surrounding vehicle 420, $t_y$ may denote a lane change time, $l_w$ may denote a width of the lane, and $a_{y,sur}$ may denote a lateral surrounding vehicle acceleration. For example, $l_w$ may be 3.6 m.

In addition, the driving distance ($L_{cut}$) of the ego vehicle during the lane change of the surrounding vehicle 420 may be calculated according to Equation 7, and a lane change point ($P_{lc,sur}$) at which the surrounding vehicle 420 starts to change a lane while driving straight ahead may be calculated according to Equation 8.

<Equation 7>

$$L_{cut} = V_{sur} \times 2\sqrt{\frac{l_w}{a_{y,sur}}}$$

<Equation 8>

$$P_{lc,sur}(x) = P_{collision}(x) - L_{cut}(x)$$

where, $V_{sur}$ may denote the surrounding vehicle speed, $l_w$ may denote the width of the lane, and $a_{y,sur}$ may denote the lateral acceleration of the surrounding vehicle 420. In addition, $P_{collision}$ may denote the collision point 430 between the ego vehicle 410 and the surrounding vehicle 420, and $L_{cut}$ may denote the driving distance of the surrounding vehicle 420 in the section where the surrounding vehicle 420 changes a lane. If the surrounding vehicle 420 changes a lane, the lateral acceleration ($a_{y,sur}$) of the surrounding vehicle 420 may be associated with whether the surrounding vehicle 420 changes a lane quickly or slowly.

The processor of the information processing system (or user terminal) may generate a plurality of cases associated with the collision scenario based on parameter sets. In this case, the parameter sets may include a first parameter set (Preset Parameters in Table 1) having fixed values, and a second parameter set (Sweeping Parameters in Table 1) having predetermined sweeping ranges. Specifically, the processor may generate a plurality of cases by changing, within the sweeping range, each parameter value in the second parameter set.

For the scenario 400 associated with the lane change, the second parameter set may include a relative velocity ($V_{rel}$) between the ego vehicle 410 and the surrounding vehicle 420, and the surrounding vehicle acceleration ($a_{sur}$). In this case, the relative velocity ($V_{rel}$) between the ego vehicle 410 and the surrounding vehicle 420 may be calculated according to Equation 9.

<Equation 9>

$$V_{rel} = V_{ego} - V_{sur}$$

That is, in the scenario 400 associated with the lane change, the processor may generate a plurality of cases by changing, within the sweeping range, the relative velocity ($V_{rel}$) between the ego vehicle 410 and the surrounding vehicle 420 and the surrounding vehicle acceleration ($a_{sur}$) value. The processor may determine a third parameter set (Calculated Parameter of Table 1) for each case based on the first parameter set (Preset Parameter of Table 1) and the second parameter set (Sweeping Parameter of Table 1). Specifically, the processor may determine the third parameter set so that the ego vehicle 410 collides with the surrounding vehicle 420. In addition, the processor may determine a surrounding vehicle start point value associated with the third parameter set based on the ego vehicle speed value associated with the first parameter set.

FIG. 5 is a diagram illustrating an example of a graph 500 of collision risk levels for a plurality of cases of a lane change collision scenario. In order to evaluate the autonomous driving algorithm for a plurality of cases of the collision scenario, an index is required, which can objectively represent the risk level. For example, an inverse time-to-collision, which is a risk level determination index, may be used. This can be calculated according to Equation 10.

<Equation 10>

$$\text{Inverse } TTC_{sur}\ [1/s]\ = \frac{V_{rel}}{P_{rel}}$$

where, $V_{rel}$ may denote the relative velocity between the ego vehicle and the surrounding vehicle, and $P_{rel}$ may denote a relative position between the ego vehicle and the surrounding vehicle. That is, the collision time ($TTC_{sur}$) is the TTC between the ego vehicle and the surrounding vehicle, and it indicates the real-time risk level with the surrounding vehicle. For example, the inverse time-to-collision may be continuously calculated while the simulation for each of the plurality of cases in the collision scenario is performed, and a maximum value of the calculated inverse times-to-collision may be determined to be the collision risk level of the corresponding case. Since the collision time ($TTC_{sur}$) represents the real-time risk level with the surrounding vehicle, if the surrounding vehicle changes a lane according to the planned trajectory, but if the ego vehicle applies the brakes to decelerate and maintains the distance from the surrounding vehicle, the ego vehicle has a low risk level (Inverse $TTC_{sur}$). That is, the larger the value of the inverse time-to-collision (Inverse $TTC_{sur}$), the greater the risk level, and the smaller the value of the inverse time-to-collision (Inverse $TTC_{sur}$), the lower the risk level.

The processor of the information processing system (or user terminal) may evaluate the collision risk level for each of a plurality of cases of the scenario associated with the lane change. For example, as illustrated in FIG. 5, the collision risk level graph 500 for a plurality of cases of the lane change collision scenario may be a graph of the inverse times-to-collision (Inverse $TTC_{sur}$) calculated for each of a plurality of cases generated based on the relative velocity ($V_{rel}$) between the ego vehicle and the surrounding vehicle and the surrounding vehicle acceleration ($a_{sur}$), which have a predetermined sweeping ranges.

Table 2 shows parameter settings for the evaluation of the collision risk level graph 500 by using the inverse times-to-collision for a plurality of cases of the scenario associated with the lane change. Assuming highway conditions, the ego vehicle speed is set to about 100 km/h, and the scenario start distance (or scenario activation distance of the ego vehicle) is set to be 100 m away from the collision point in consideration of the sensor's perceived distance limit. For the driving speed of the surrounding vehicle, the sweeping range is set to the speed of 80 km/h to 120 km/h (22.2 m/s to 33.4 m/s) which is divided into 5 sections by 2.8 m/s, and for the surrounding object acceleration, in order to reflect various lane change driving characteristics of the surrounding vehicle, the sweeping range is set to 4.8 $m/s^2$ to 7.2 $m/s^2$ which is divided into 5 sections by 0.6 $m/s^2$. The autonomous driving algorithm is simulated by applying a rule-based collision avoidance algorithm.

[Table 2]

| Classification | Parameter | Nominal Value |
|---|---|---|
| Scenario Activation Distance | $S_{collision}$ (m) | 100 |
| Ego Vehicle Speed | $V_{ego}$ (m/s) | 27.8 |
| Surrounding Vehicle Speed | $V_{sur}$ (m/s) | 22.2 : 2.8 : 33.4 |
| Surrounding Vehicle Acceleration | $a_{sur}$ ($m/s^2$) | 4.8 : 0.6 : 7.2 |

By sweeping the parameters within the predetermined sweeping range according to corresponding conditions, simulations were repeatedly performed for a total of 25 cases, and the results were analyzed. The result of the simulation of the collision risk levels for a plurality of cases of the scenario associated with the lane change is illustrated in FIG. 5. The risk level tends to increase as the relative velocity ($V_{rev}$) between the ego vehicle and the surrounding vehicle increases, that is, as the surrounding vehicle travels slower than the ego vehicle. It is considered that the risk level tends to increase because the collision time is shorter as the relative velocity ($V_{rel}$) of the ego vehicle and the surrounding vehicle increases. In addition, regarding the surrounding vehicle acceleration ($a_{sur}$), it is observed that the higher the maximum acceleration, the more dangerous it becomes. The maximum acceleration of the surrounding vehicle indicates whether the surrounding vehicle abruptly changes a lane and intervenes into the driving lane of the ego vehicle, and therefore, if the surrounding vehicle abruptly changes a lane, it is determined that the risk level tends to increase. It can be seen that the analysis results show relatively reasonable results due to the characteristics of the rule-based collision avoidance algorithm.

The processor of the information processing system (or user terminal) may determine an edge case 510 having a collision risk level equal to or greater than a predetermined threshold. The edge case 510 may indicate a vulnerable situation of the corresponding autonomous driving algorithm. For example, as illustrated in FIG. 5, if a case generated with the relative velocity ($V_{rel}$ = 4 $m/s$) between the ego vehicle and the surrounding vehicle and the surrounding vehicle acceleration ($a_{sur}$ = 8 $m/s^2$) has a collision risk level equal to or greater than the threshold, the corresponding case may be determined to be the edge case 510. In another example, the processor may calculate an average value of the inverse times-to-collision for a plurality of cases or calculate the number of cases exceeding a predetermined threshold to evaluate the performance of the autonomous driving algorithm.

FIG. 6 is a diagram illustrating an example of a parameter associated with an intersection collision scenario 600. As illustrated, the intersection collision scenario 600 may be a scenario in which an ego vehicle 610 and a surrounding vehicle 620 collide with each other at a collision point 630. In this case, parameters associated with the intersection collision scenario 600 may include a speed ($V_{ego}$) of the ego vehicle 610, a scenario activation time ($TTC_{conision}$) to the collision point, a scenario activation distance ($S_{collision}$) of the ego vehicle 610, the collision point ($P_{collision}$) 630, a scenario activation point ($P_{activation}$) 640, a speed ($V_{sur}$) of the surrounding vehicle 620, a start point ($P_{start,sur}$) 650 of the surrounding vehicle 620, and a collision point shift.

In order to generate a plurality of cases associated with a collision scenario for evaluating the autonomous driving algorithm, the processor of the information processing system (or user terminal) may reflect the driving (or flight) characteristics of the moving object with respect to the scenario to be evaluated to perform parameterization. In addition, the processor of the information processing system (or user terminal) may determine the parameters associated with the collision scenario using the vehicle dynamics characteristics. For example, the processor may determine the parameters using the vehicle dynamics characteristics so as to induce a collision at the collision point 630 of the ego vehicle 610 and the surrounding vehicle 620 in the scenario 600 associated with the intersection.

Table 3 below shows parameters forming the intersection collision scenario 600. In describing certain examples below, repeated descriptions of the parameters identical to or corresponding to the parameters already described above in FIG. 4 may be omitted. Unlike the lane change scenario (e.g., 400 of FIG. 4), the intersection collision scenario 600 may include a collision point shift ($S_{shift}$) parameter. The collision point shift parameter is required to classify, when the ego vehicle 610 and the surrounding vehicle 620 collide at an intersection: (i) a type of collision on the front of the surrounding vehicle 620 by the side of the ego vehicle 610; (ii) a type of collision between a front edge of the ego vehicle 610 and a front edge of the surrounding vehicle 620; and (iii) a type of collision on the front of the ego vehicle 610 by the side of the surrounding vehicle 620.

[Table 3]

| Classification | Parameter | |
|---|---|---|
| Preset Parameter | Collision Point | $P_{collision}(x)$ |
| | Scenario Activation Time | $TTC_{collision}(sec)$ |
| | Ego Vehicle Speed | $V_{ego}(m/s)$ |
| Calculated Parameter | Scenario Activation Distance | $S_{collision}(m)$ |
| | Scenario Activation Point | $P_{activation}(x)$ |
| | Surrounding Vehicle Start Point | $P_{start,sur}(x)$ |
| Sweeping Parameter | Surrounding Vehicle Speed | $V_{sur}(m/s)$ |
| | Collision Point Shift | $S_{shift}(m)$ |

The processor of the information processing system (or user terminal) may generate a plurality of cases associated with the collision scenario based on parameter sets. In this case, the parameter sets may include a first parameter set (Preset Parameter in Table 3) having fixed values, and a second parameter set (Sweeping Parameter in Table 3) having predetermined sweeping ranges. Specifically, the processor may generate a plurality of cases by changing, within the sweeping range, each parameter value in the second parameter set.

For the scenario 600 associated with the intersection, the second parameter set may include the relative velocity ($V_{rel}$) between the ego vehicle 610 and the surrounding vehicle 620 and the collision point shift ($S_{shift}$). That is, in the scenario 600 associated with the intersection, the processor may generate a plurality of cases by changing, within the sweeping range, the relative velocity ($V_{rel}$) between the ego vehicle 610 and the surrounding vehicle 620 and the collision point shift ($S_{shift}$) value. The processor may determine a third parameter set (Calculated Parameter of Table 3) for each case based on the first parameter set (Preset Parameter of Table 3) and the second parameter set (Sweeping Parameter of Table 3). Specifically, the processor may determine the third parameter set so that the ego vehicle 610 collides with the surrounding vehicle 620. In addition, the processor may determine a surrounding vehicle start point value associated with the third parameter set based on the ego vehicle speed value associated with the first parameter set.

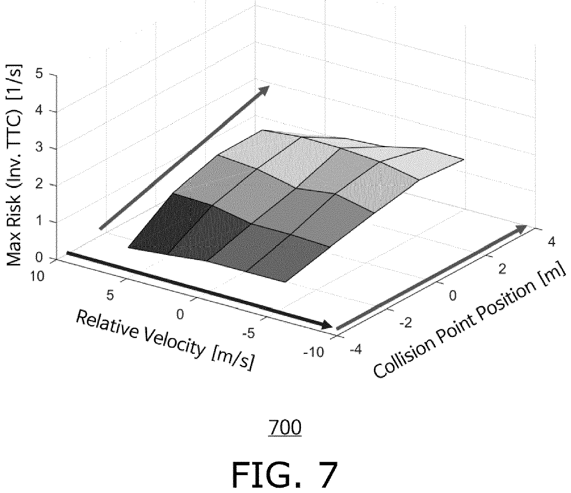

FIG. 7 is a diagram illustrating an example of a graph 700 of collision risk levels for a plurality of cases of the intersection collision scenario. The processor of the information processing system (or user terminal) may evaluate the collision risk level for each of a plurality of cases of the scenario associated with the intersection. For example, as illustrated in FIG. 7, the collision risk level graph 700 for a plurality of cases of the intersection collision scenario may be a graph of the inverse times-to-collision (Inverse $TTC_{sur}$) calculated for each of a plurality of cases generated based on the relative velocity ($V_{rel}$) between the ego vehicle and the surrounding vehicle and the collision point shift ($S_{shift}$), which have a predetermined sweeping range.

Table 4 shows parameter settings for the evaluation of the collision risk level graph 700 by using the inverse times-to-collision for a plurality of cases of the scenario associated with the intersection. Assuming a driving situation at an urban intersection, the ego vehicle speed is set to about 40 km/h, and the scenario start distance (or scenario activation distance of the ego vehicle) is set to be 100 m away from the collision point. For the surrounding vehicle, the sweeping range is set to the speed of 20 km/h to 60 km/h (5.5 m/s to 16.7 m/s) which is divided into 5 sections by 2.8 m/s, and for the collision point shift, in order to distinguish the types of collision at the intersection between the ego vehicle and the surrounding vehicle, the sweeping range is set to a range of -3.6 m to 3.6 m which is divided into 5 sections by 1.8 m. The autonomous driving algorithm is simulated by applying a rule-based collision avoidance algorithm. Alternatively, a learning-based artificial intelligence algorithm rather than a rule-based collision avoidance algorithm may be used.

[Table 4]

| Classification | Parameter | Nominal Value |
|---|---|---|
| Scenario Activation Distance | $S_{collision}(m)$ | 100 |
| Ego Vehicle Speed | $V_{x,ego}(m/s)$ | 11.1 |
| Surrounding Vehicle Speed | $V_{x,surround}(m/s)$ | 5.5 : 2.8 : 16.7 |
| Collision Point Shift | $S_{shift}(m)$ | -3.6 : 1.8 : 3.6 |

By sweeping the parameters within the predetermined sweeping range according to corresponding conditions, simulations were repeatedly performed for a total of 25 cases, and the results were analyzed. The result of the simulation of the collision risk levels for a plurality of cases of the scenario associated with the intersection is illustrated in FIG. 7. As the relative velocity ($V_{rel}$) of the ego vehicle and the surrounding vehicle increased, the risk level slightly increased, but it did not show a significant change compared to the lane change scenario. Also, in the actual evaluation using the autonomous driving algorithm, there could be differences in the risk levels depending on the environment, such as the sensor recognition distance limit and the like. On the other hand, regarding the collision point shift, it can be seen that the risk level tendency greatly changes. This may indicate that it is difficult to respond to a situation in which the surrounding vehicle arrives earlier than the ego vehicle and interferes with the front of the ego vehicle to collide.

The processor of the information processing system (or user terminal) may determine an edge case having a collision risk level equal to or greater than a predetermined threshold. The edge case may indicate a vulnerable situation of the corresponding autonomous driving algorithm. In another example, the processor may calculate an average value of the inverse times-to-collision for a plurality of cases or calculate the number of cases exceeding a predetermined threshold to evaluate the performance of the autonomous driving algorithm.

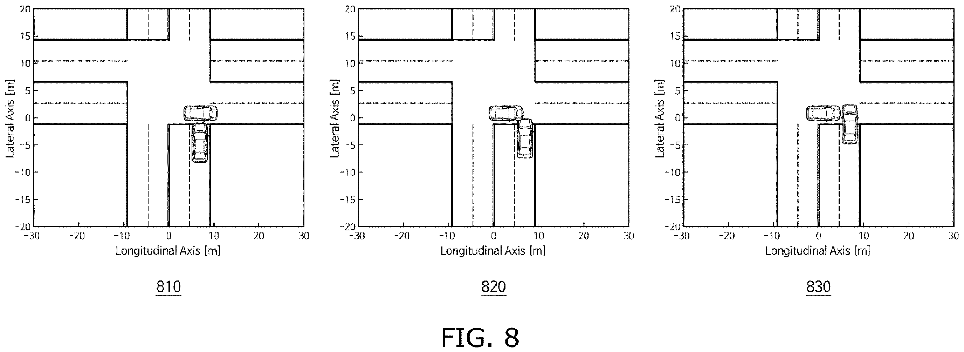

FIG. 8 is a diagram illustrating an example of collision types 810, 820, and 830 of the collision point shift parameters in the intersection collision scenario. The intersection collision scenario (e.g., 600 of FIG. 6) may include a collision point shift parameter. This is necessary in order to classify, when the ego vehicle and the surrounding vehicle collide at an intersection: (i) a type 810 of collision between the side of the ego vehicle and the front of the surrounding vehicle; (ii) a type 820 of collision between the front edge of the ego vehicle and the front of the surrounding vehicle; and (iii) a type 830 of collision between the side of the surrounding vehicle and the front of the ego vehicle.

The processor of the information processing system (or user terminal) may generate a plurality of cases by changing, within a predetermined sweeping range, each parameter value in the parameter set (or second parameter) having the sweeping range. For example, the processor may generate a plurality of cases of different collision types in the intersection collision scenario, by applying the collision point shift ($S_{shift}$) value of the predetermined sweeping range to a preset collision point ($P_{collision}$).

Although FIG. 8 illustrates three types of intersection collision types 810, 820, and 830, aspects are not limited thereto and may include other types of collisions between the ego vehicle and the surrounding vehicle at the intersection.

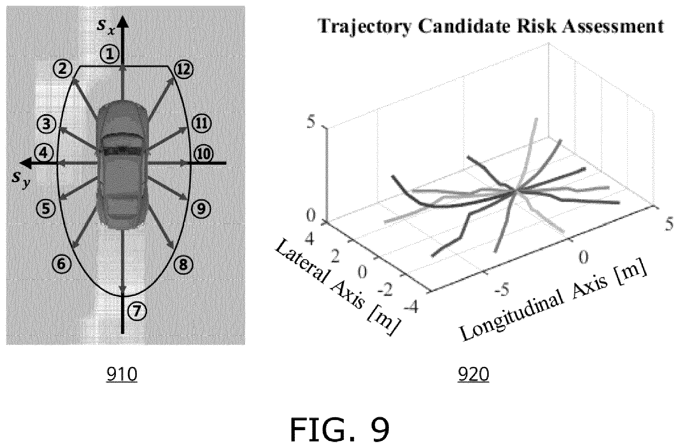

FIG. 9 is a diagram illustrating an example of an avoidance trajectory candidate 910 and a risk level 920 of each trajectory generated by the collision avoidance algorithm. It is possible to evaluate an autonomous driving algorithm that is a target of evaluation, by applying the algorithm to a plurality of cases of the collision scenario generated with reference to FIGS. 4 and/or 6. This may be performed using a collision avoidance system (CAS). With this, it is possible to identify the performance trend and characteristics of the algorithm, and based on this, also identify the weaknesses and risk scenarios of the algorithm.

FIG. 9 illustrates an example of a general collision avoidance algorithm selected to apply the autonomous driving algorithm to a plurality of cases of the collision scenario. The collision avoidance algorithm can predict the collision with the surrounding vehicle, determine the risk level of a previously generated trajectory, and select the safest avoidance trajectory. In order to determine the risk level in a multi-vehicle situation, the collision avoidance algorithm may use a predictive occupancy map (POM). For the avoidance trajectory, as illustrated in FIG. 9, a vector-based trajectory candidate 910 may be generated in advance in consideration of the dynamic limit of the vehicle. The risk level 920 of each trajectory may be calculated using the POM for each trajectory, and the safest trajectory may be selected based on the calculated experience level. In this case, the basic acceleration limit of the vehicle may be expressed by Equations 11 and 12, and the final destination of the trajectory according to this may be expressed by Equations 13 and 14.

<Equation 11>

$$(\mu g)^2 = A_{x_{lim}}^2 + A_{y_{lim}}^2$$

<Equation 12>

$$A_{x_{lim}} = \begin{cases} A_{e_{lim}} & (A_{e_{lim}} \leq \sqrt{(\mu g)^2 - A_{y_{lim}}^2}) \\ \sqrt{(\mu g)^2 - A_{y_{lim}}^2} & (A_{e_{lim}} > \sqrt{(\mu g)^2 - A_{y_{lim}}^2}) \end{cases}$$

<Equation 13>

$$S_{x_{lim}} = \frac{1}{2} A_{x_{lim}} t_f^2$$

<Equation 14>

$$S_{y_{lim}} = \frac{1}{4} A_{y_{lim}} t_f^2$$

where, $\mu$ denotes a road friction coefficient, $g$ denotes a gravitational acceleration, $A_{lim}$ denotes an acceleration limit according to a friction limit, $A_{e_{lim}}$ denotes an acceleration limit according to an engine output, $S_{lim}$ denotes a distance limit that can be reached within the active time of the collision avoidance system at the acceleration limit, and $t_f$ denotes a time taken to reach the distance limit.

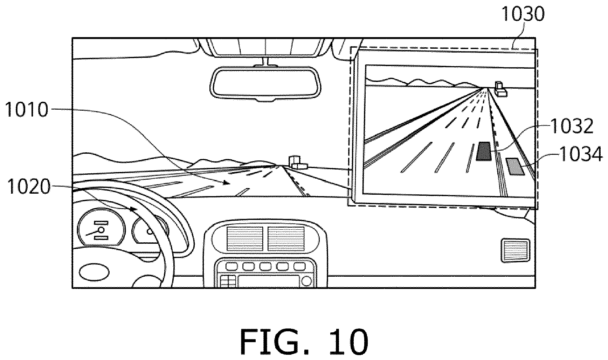

FIG. 10 is a diagram illustrating an example in which a simulation result is displayed through a display 1030 installed inside a vehicle 1020 driving on an actual road 1010. In order to evaluate the autonomous driving algorithm, it is necessary to evaluate the driving state of the vehicle (or moving object) in which the autonomous driving algorithm is applied on the actual road. However, since it can be dangerous to other driving vehicles or pedestrians, the behavior of the vehicle in which the autonomous driving algorithm is applied may be tested through a simulation that operates by interacting with a virtual surrounding vehicle.

For example, as illustrated in FIG. 10, the simulation may be performed using data received from a vehicle 1020 in which the autonomous driving algorithm is applied, while the vehicle 1020 is driving on the actual road 1010. In this case, the actual road 1010 may be a test road for evaluating the autonomous driving algorithm. In addition, the simulation performance result may be displayed through the display 1030 installed inside the vehicle 1020.

Specifically, a value of a parameter associated with the collision scenario may be determined based on the data received from the vehicle 1020 in which the autonomous driving algorithm is applied, on the actual road 1010, and a simulation may be performed using the value. A simulation result may be displayed on the display 1030. The simulation result may include driving states of the ego vehicle 1032 and the virtual surrounding vehicle 1034. In this case, the ego vehicle 1032 may represent a virtual object operating in association with the driving state of the vehicle in which the autonomous driving algorithm is applied, and which is driving on the actual road 1010, and the surrounding vehicle 1034 may represent a virtual object set to induce a collision with the ego vehicle 1032 at any collision point.

The processor of the information processing system (or user terminal) may perform a simulation for each of a plurality of cases associated with the collision scenario using the autonomous driving algorithm. In this case, the plurality of cases associated with the collision scenario may be generated based on parameter sets associated with the collision scenario between the ego vehicle 1032 in which the autonomous driving algorithm is applied and the surrounding vehicle 1034. In addition, the parameter sets may include a first parameter set having fixed values and a second parameter set having predetermined sweeping ranges. At least one parameter of the first parameter set having the fixed values may be determined by the data received from the vehicle (or moving object) 1020 that is actually moving while the autonomous driving algorithm is in operation. For example, based on the moving speed received from the vehicle 1020, the speed ($V_{ego}$) of the ego vehicle 1032 may be determined. A simulation result of a case having the highest collision risk level among a plurality of cases may be displayed on the display 1030 installed inside the vehicle (or moving object) 1020 that is actually moving.

Although FIG. 10 illustrates an example of performing a simulation on the vehicle 1020 driving on the actual road 1010, aspects are not limited thereto, and the simulation may be performed on other moving object such as a drone, a robot, or the like operated by an algorithm.

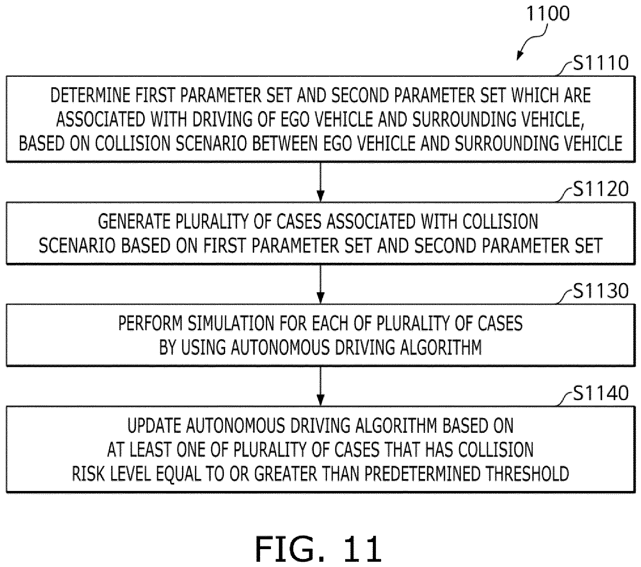

FIG. 11 is a flowchart illustrating a method 1100 for evaluating the performance of an autonomous driving algorithm. The method 1100 for evaluating the performance of the autonomous driving algorithm may be performed by a processor (e.g., at least one processor of a user terminal or information processing system). In another example, the information processing system and the user terminal may divide and perform the steps of the method 1100 for evaluating the performance of the autonomous driving algorithm.

The method 1100 for evaluating the performance of the autonomous driving algorithm may be initiated by determining a first parameter set and a second parameter set associated with driving of an ego vehicle and a surrounding vehicle, based on a collision scenario between the ego vehicle in which the autonomous driving algorithm is applied and the surrounding vehicle, at S1110. In this case, each parameter in the first parameter set may have a fixed value, and each parameter in the second parameter set may have predetermined sweeping ranges. In addition, the first parameter set may include at least one parameter associated with the driving of the ego vehicle, and the second parameter set may include at least one parameter associated with the driving of the surrounding vehicle.

The processor may generate a plurality of cases associated with the collision scenario based on the first parameter set and the second parameter set, at S 1120. For example, the processor may generate a plurality of cases by changing, within a sweeping range, each value in the second parameter set. The first parameter set may include an ego vehicle speed value, and the third parameter set may include a surrounding vehicle start point value. The collision scenario may be the collision scenario associated with the lane change. In this case, the first parameter set, the second parameter set, and the third parameter set may be obtained by parameterizing the collision scenario associated with the lane change. The collision scenario may be the collision scenario associated with the intersection. In this case, the first parameter set, the second parameter set, and the third parameter set may be obtained by parameterizing the collision scenario associated with the intersection.

At least one parameter of the first parameter set may be determined by the data received from the moving object that is actually moving while the autonomous driving algorithm is in operation. Additionally, the processor may determine, for each of the plurality of cases, the third parameter set based on the first parameter set and the second parameter set such that the ego vehicle and the surrounding vehicle collide with each other. In addition, the processor may determine a surrounding vehicle start point value associated with the third parameter set based on the ego vehicle speed value associated with the first parameter set.

The collision scenario may be the collision scenario associated with the lane change. In this case, the first parameter set may include the collision point, the scenario activation time, and the ego vehicle speed, and the second parameter set may include the surrounding vehicle speed and the surrounding vehicle acceleration.

The collision scenario may be the collision scenario associated with the intersection. In this case, the first parameter set may include the collision point, the scenario activation time, and the ego vehicle speed, and the second parameter set may include the surrounding vehicle speed and the collision point shift value.

After the plurality of cases are generated, the processor may perform a simulation on each of the plurality of cases using the autonomous driving algorithm, at S 1130. For example, the processor may evaluate the collision risk level for each of the plurality of cases. Additionally, the processor may update the autonomous driving algorithm based on at least one of the plurality of cases that has a collision risk level equal to or greater than a predetermined threshold, at S1140. Additionally, a simulation result of a case having the highest collision risk level among a plurality of cases may be displayed on a display installed inside the moving body that is actually moving.

With such a configuration, parameters forming a driving scenario may be analyzed so as to generate a scenario for evaluating the performance of the autonomous driving algorithm, and using this, a plurality of various cases in the same collision scenario may be generated. In addition, the plurality of cases may be implemented to enable simulation, through analysis of correlation between the parameters based on the vehicle dynamics characteristics. As described above with reference to FIGS. 4 to 10, the method of the present disclosure may perform evaluation of an autonomous driving algorithm and/or collision avoidance algorithm in a collision scenario associated with a lane change and a collision scenario associated with an intersection, and may determine the performance and characteristics of the driving algorithm according to a change in a parameter value associated with the scenario. In addition, as described above with reference to FIGS. 5 and 7, as a result of evaluating any autonomous driving algorithm and/or collision avoidance algorithm for a plurality of cases generated using the method of the present disclosure, it is confirmed that the driving trajectory and speed of the autonomous driving algorithm are changed according to each scenario situation. Through this, it is confirmed that it is possible to analyze which specific case of the collision scenario that the autonomous driving algorithm is vulnerable.

It is considered that this evaluation method can be advantageously utilized to identify vulnerable situations of the autonomous driving algorithm or to find edge cases in which the autonomous driving algorithm inappropriately responds to a specific scenario in the AI-based learning algorithm.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, and so on. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, and the like. The instructions may be executable by one or more processors, and may cause the processor(s) to perform certain aspects of the functions described in the present disclosure.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or devices, and storage may be similarly influenced across a plurality of devices. Such devices may include PCs, network servers, and portable devices.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

**Claims**

1.  A method for evaluating a performance of an autonomous driving algorithm, the method performed by one or more processors and comprising:

    determining a first parameter set and a second parameter set which are associated with a driving of an ego vehicle in which the autonomous driving algorithm is applied and a driving of a surrounding vehicle, based on a collision scenario between the ego vehicle and the surrounding vehicle;
    generating a plurality of cases associated with the collision scenario based on the first parameter set and the second parameter set; and
    performing a simulation for each of the plurality of cases using the autonomous driving algorithm,
    wherein each parameter of the first parameter set has a fixed value, and
    each parameter of the second parameter set has a predetermined sweeping range.

2.  The method according to claim 1, wherein the first parameter set includes at least one parameter associated with the driving of the ego vehicle, and
    the second parameter set includes at least one parameter associated with the driving of the surrounding vehicle.

3.  The method according to claim 1, wherein the generating the plurality of cases includes generating the plurality of cases by changing, within a sweeping range, each value in the second parameter set.

4.  The method according to claim 3, wherein the generating the plurality of cases further includes determining, for each of the plurality of cases, a third parameter set based on the first parameter set and the second parameter set such that the ego vehicle and the surrounding vehicle collide with each other.

5. The method according to claim 4, wherein the first parameter set includes a speed value of the ego vehicle, and the third parameter set includes a start point value of the surrounding vehicle.

6. The method according to claim 4, wherein the collision scenario is a collision scenario associated with a lane change, and the first parameter set, the second parameter set and the third parameter set are obtained by parameterizing the collision scenario associated with the lane change.

7. The method according to claim 4, wherein the collision scenario is a collision scenario associated with an intersection, and the first parameter set, the second parameter set and the third parameter set are obtained by parameterizing the collision scenario associated with the intersection.

8. The method according to claim 1, wherein the performing the simulation includes evaluating a collision risk level for each of the plurality of cases.

9. The method according to claim 8, further comprising updating the autonomous driving algorithm based on at least one of the plurality of cases that has a collision risk level equal to or greater than a predetermined threshold.

10. The method according to claim 1, wherein at least one parameter of the first parameter set is determined by data received from a moving object that is actually moving while the autonomous driving algorithm is in operation, and a simulation result of a case having a highest collision risk level among the plurality of cases is displayed on a display installed inside the moving object that is actually moving.

11. The method according to claim 1, wherein the collision scenario is a collision scenario associated with a lane change,

the first parameter set includes a collision point, a scenario activation time, and a speed of the ego vehicle, and the second parameter set includes a speed of the surrounding vehicle and an acceleration of the surrounding vehicle.

12. The method according to claim 1, wherein the collision scenario is a collision scenario associated with an intersection,

the first parameter set includes a collision point, a scenario activation time, and a speed of the ego vehicle, and the second parameter set includes a speed of the surrounding vehicle and a collision point shift value.

13. A non-transitory computer-readable recording medium storing instructions that, when executed by one or more processors, cause performance of the method according to claim 1.

14. A system for evaluating a performance of an autonomous driving algorithm, the system comprising:

a memory; and
one or more processors connected to the memory and configured to execute one or more computer-readable programs included in the memory,
wherein the one or more programs include instructions for:

determining a first parameter set and a second parameter set which are associated with a driving of an ego vehicle in which the autonomous driving algorithm is applied and a driving of a surrounding vehicle, based on a collision scenario between the ego vehicle and the surrounding vehicle;
generating a plurality of cases associated with the collision scenario based on the first parameter set and the second parameter set; and
performing a simulation for each of the plurality of cases using the autonomous driving algorithm, and each parameter of the first parameter set has a fixed value, and
each parameter of the second parameter set has a predetermined sweeping range.

FIG. 1

FIG. 2

EP 4 238 844 A1

300

| 310 | 320 |
|---|---|
| PARAMETER GENERATION UNIT | CASE GENERATION UNIT |

| 330 | 340 |
|---|---|
| SIMULATION PERFORMING UNIT | COLLISION RISK LEVEL EVALUATION UNIT |

350

ALGORITHM UPDATING UNIT

# FIG. 3

FIG. 4

FIG. 5

FIG. 6

700

FIG. 7

EP 4 238 844 A1

810

820

830

FIG. 8

910

Trajectory Candidate Risk Assessment

920

FIG. 9

FIG. 10

1100

S1110

DETERMINE FIRST PARAMETER SET AND SECOND PARAMETER SET WHICH ARE
ASSOCIATED WITH DRIVING OF EGO VEHICLE AND SURROUNDING VEHICLE,
BASED ON COLLISION SCENARIO BETWEEN EGO VEHICLE AND SURROUNDING VEHICLE

S1120

GENERATE PLURALITY OF CASES ASSOCIATED WITH COLLISION
SCENARIO BASED ON FIRST PARAMETER SET AND SECOND PARAMETER SET

S1130

PERFORM SIMULATION FOR EACH OF PLURALITY OF CASES
BY USING AUTONOMOUS DRIVING ALGORITHM

S1140

UPDATE AUTONOMOUS DRIVING ALGORITHM BASED ON
AT LEAST ONE OF PLURALITY OF CASES THAT HAS COLLISION
RISK LEVEL EQUAL TO OR GREATER THAN PREDETERMINED THRESHOLD

FIG. 11

## INTERNATIONAL SEARCH REPORT

| International application No. |
| --- |
| **PCT/KR2022/017580** |

**A.    CLASSIFICATION OF SUBJECT MATTER**

**B60W 60/00**(2020.01)i; **B60W 30/08**(2006.01)i; **B60W 30/18**(2006.01)i; **B60W 50/00**(2006.01)i

According to International Patent Classification (IPC) or to both national classification and IPC

**B.    FIELDS SEARCHED**

Minimum documentation searched (classification system followed by classification symbols)

B60W 60/00(2020.01); G05D 1/02(2006.01); G06Q 10/04(2012.01); G06Q 10/06(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자율 주행(autonomous driving), 충돌(collision), 시나리오(scenario), 평가 (assessment) 및 파라미터(parameter)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2020-0085363 A (WAYMO LLC) 14 July 2020 (2020-07-14)<br>        See paragraphs [0004], [0033]-[0035], [0042]-[0048] and [0071] and figures 1, 4 and 6. | 1-5,10,13,14 |
| Y | | 6-9,11,12 |
| Y | 채흥석 등. 자율주행 안전성 평가 시나리오 개발 및 검증. 자동차안전학회지. 2017, vol. 9, no. 1, pp. 6-12 (CHAE, Heungseok et al. Development and Validation of Safety Performance Evaluation Scenarios of Autonomous Vehicle. Journal of Auto-Vehicle Safety Association.)<br>        See page 9. | 6-9,11,12 |
| A | KR 10-2090920 B1 (NISSAN NORTH AMERICA, INC. et al.) 19 March 2020 (2020-03-19)<br>        See paragraphs [0023]-[0297] and figures 1-9. | 1-14 |
| A | KR 10-2020-0118882 A (HUAWEI TECHNOLOGIES CO., LTD.) 16 October 2020 (2020-10-16)<br>        See paragraphs [0072]-[0227] and figures 4-20. | 1-14 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2023** | **14 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/017580**

### C. DOCUMENTS CONSIDERED TO BE RELEVANT

| Category* | Citation of document, with indication, where appropriate, of the relevant passages | Relevant to claim No. |
|---|---|---|
| PX | KR 10-2434475 B1 (MORAI INC.) 19 August 2022 (2022-08-19)<br>See paragraphs [0036]-[0135]; claims 1-2 and 5-14; and figures 1-11.<br>※ This document is the published patent of an earlier application that serves as a basis for claiming priority of the present international application. | 1-14 |

Form PCT/ISA/210 (second sheet) (July 2022)

INTERNATIONAL SEARCH REPORT
Information on patent family members

International application No.

**PCT/KR2022/017580**

| Patent document cited in search report | | | Publication date (day/month/year) | Patent family member(s) | | | Publication date (day/month/year) |
|---|---|---|---|---|---|---|---|
| KR | 10-2020-0085363 | A | 14 July 2020 | AU | 2019-205817 | A1 | 09 July 2020 |
| | | | | AU | 2019-205817 | B2 | 27 January 2022 |
| | | | | AU | 2022-202150 | A1 | 21 April 2022 |
| | | | | AU | 2022-202150 | B2 | 14 July 2022 |
| | | | | CN | 111565990 | A | 21 August 2020 |
| | | | | EP | 3710327 | A1 | 23 September 2020 |
| | | | | JP | 2021-509646 | A | 01 April 2021 |
| | | | | JP | 7183273 | B2 | 05 December 2022 |
| | | | | KR | 10-2355257 | B1 | 08 February 2022 |
| | | | | US | 10831636 | B2 | 10 November 2020 |
| | | | | US | 11210200 | B2 | 28 December 2021 |
| | | | | US | 2019-0213103 | A1 | 11 July 2019 |
| | | | | US | 2021-0004313 | A1 | 07 January 2021 |
| | | | | US | 2022-0100635 | A1 | 31 March 2022 |
| | | | | WO | 2019-136447 | A1 | 11 July 2019 |
| KR | 10-2090920 | B1 | 19 March 2020 | CA | 3052952 | A1 | 16 August 2018 |
| | | | | CA | 3052952 | C | 01 June 2021 |
| | | | | CN | 110603497 | A | 20 December 2019 |
| | | | | CN | 110603497 | B | 16 November 2021 |
| | | | | EP | 3580620 | A1 | 18 December 2019 |
| | | | | JP | 2020-508509 | A | 19 March 2020 |
| | | | | JP | 6969756 | B2 | 24 November 2021 |
| | | | | KR | 10-2019-0107169 | A | 18 September 2019 |
| | | | | US | 10654476 | B2 | 19 May 2020 |
| | | | | US | 2019-0329771 | A1 | 31 October 2019 |
| | | | | WO | 2018-147872 | A1 | 16 August 2018 |
| KR | 10-2020-0118882 | A | 16 October 2020 | CN | 110276985 | A | 24 September 2019 |
| | | | | CN | 110276985 | B | 15 December 2020 |
| | | | | EP | 3745378 | A1 | 02 December 2020 |
| | | | | EP | 3745378 | B1 | 01 June 2022 |
| | | | | JP | 2021-516816 | A | 08 July 2021 |
| | | | | US | 2020-0406911 | A1 | 31 December 2020 |
| | | | | WO | 2019-174397 | A1 | 19 September 2019 |
| KR | 10-2434475 | B1 | 19 August 2022 | None | | | |

Form PCT/ISA/210 (patent family annex) (July 2022)